# EUROPÄISCHE PATENTANMELDUNG

(11) **EP 1 978 738 A2**
(43) Veröffentlichungstag der Anmeldung: **08.10.2008**
(21) Anmeldenummer: 08005726.8
(22) Anmeldetag: 27.03.2008
(51) Int. Cl.: H04N 7/14

(54) **Verfahren und Vorrichtung zum Aufnehmen, Übertragen und/oder Wiedergeben von Bilddaten, insbesondere Videokonferenz-Bilddaten**

(30) Priorität: 03.04.2007 DE 102007016403
(71) Anmelder: Micronas GmbH, 79108 Freiburg i. Br. (DE)
(72) Erfinder: Sieben, Ulrich, 79279 Vörstetten (DE)
(74) Vertreter: Göhring, Robert

(57) **Zusammenfassung**

Die Erfindung bezieht sich auf ein Verfahren bzw. eine entsprechende Vorrichtung zum Aufnehmen, Übertragen und/oder Wiedergeben von Bilddaten (d, d1), insbesondere Videokonferenz-Bilddaten, bei dem aufgenommene und an einem zum Aufnahmeort entfernten Ort wiederzugebende solcher Bilddaten (d, d1) verarbeitet werden zum optimierten Darstellen auf einer Anzeigeeinrichtung (12) zum Wiedergeben der Bilddaten (d, d1) eines Bild-Wiedergabegeräts, wobei in den Bilddaten (d, d1) nach Augen (E) gesucht wird und ein wiederzugebendes Bild des Teilnehmers (P) so innerhalb der Anzeigeeinrichtung (12) angeordnet wird, dass die Augen (E) auf Höhe zumindest einer seitlich der Anzeigeeinrichtung (12) angeordneten Kamera (3, 3*, 13, 13*) wiedergegeben werden.

## Beschreibung

Die Erfindung bezieht sich auf ein Verfahren zum Aufnehmen, Übertragen und/oder Wiedergeben von Bilddaten, insbesondere Videokonferenz-Bilddaten mit den oberbegrifflichen Merkmalen gemäß Patentanspruch 1 bzw. auf eine Vorrichtung zum Durchführen eines solchen Verfahrens.

Systeme zum Durchführen von Videokonferenzen sind derzeit im geschäftlichen Bereich weit verbreitet. Im Zuge der aufkommenden Internet-Telephonie finden solche Systeme auch im privaten Umfeld zunehmend Anwendung.

Im professionellen Bereich werden qualitativ gute Kameras und Datenkompressions-Technologien eingesetzt. Außerdem werden hohe Datenraten verwendet. Im Vergleich zum privaten Bereich mit relativ einfachen Kameras und Datenübertragungsverfahren werden im professionellen Bereich aufgrund des technisch hohen Aufwandes bereits recht gute Bildqualitäten ermöglicht. Im professionellen Bereich wird üblicherweise eine Kamera auf einen Konferenzraum gerichtet, in dem sich mehrere Teilnehmer befinden. Dadurch befinden sich die Teilnehmer relativ weit von der Kamera entfernt, so dass der für einen einzelnen Kopf zur Verfügung stehende Bildausschnitt auf einem Wiedergabegerät bei einem empfangenden Teilnehmer nur klein ist.

Bei der privaten Nutzung aber zunehmend auch bei geschäftlichem Einsatz von Verfahren zur Durchführung von Videokonferenzen befinden sich die Teilnehmer sehr viel dichter an den auf sie gerichteten Kameras, teilweise nur einige 10 cm entfernt. Häufig nehmen an einer privaten Videokonferenz nur zwei Teilnehmer teil, welche dann eine genügend große Darstellung des Kopfes ihres Gegenübers erwarten, um eine emotional dichtere Kommunikations-Atmosphäre zu erzeugen. Entsprechend wird auf dem jeweiligen Bildschirm im Wesentlichen nur der Kopf des Gegenübers in Originalgröße abgebildet.

Frühe Versuche, das Problem in den Griff zu bekommen, bestanden in einem Arrangement, bei dem sich ein Bildschirm vor einem Teilnehmer der Videokonferenz und eine Kamera unterhalb des Bildschirms mit nach oben gerichtetem Objektiv befindet. Vor dem Bildschirm befindet sich unter einem Winkel von 45° eine Glasplatte, die als halb durchlässiger Spiegel wirkt und das Gesicht des Teilnehmers nach unten in ein Objektiv der Kamera spiegelt. Diese Anordnung funktioniert recht gut, erfordert aber eine große Bautiefe und stellt daher für Anordnungen mit heutigen flachen Bildschirmen keine geeignete Lösung mehr dar.

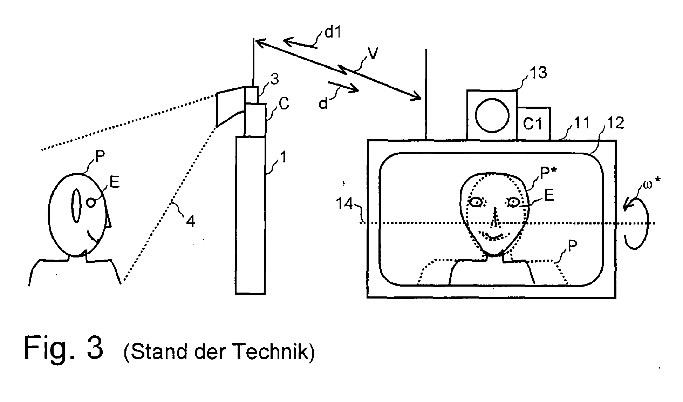

Fig. 3 zeigt eine beispielhafte Situation einer Videokonferenz, wobei die linke Hälfte von Fig. 3 eine erste Person als einen ersten Teilnehmer einer Videokonferenz vor entsprechenden Geräten am ersten Ort und die rechte Hälfte von Fig. 3 Komponenten für die Durchführung einer Videokonferenz an einem zweiten vom ersten Ort entfernten Ort skizziert. An beiden Orten befindet sich jeweils ein Bildschirm 1, 11 als ein Bild-Wiedergabegerät mit jeweils einer Anzeigeeinrichtung 12 zum Anzeigen eines Bildes bzw. einer Bildfolge. Außerdem ist an jedem der Orte eine Kamera 3, 13 bereitgestellt, welche auf den vor dem Bildschirm 11 sitzenden Teilnehmer P gerichtet ist. In üblicher Art und Weise weist diese Anordnung zusätzlich jeweils eine Steuereinrichtung C, C1 auf, die zur Verarbeitung von Bilddaten dient. Insbesondere dient die Steuereinrichtung C, C1 auch dazu, von dem jeweils anderen Ort bzw. der jeweils anderen Kamera 13, 3 empfangene Bilddaten d1, d auf der der Steuereinrichtung C, C1 zugeordneten Anzeigeeinrichtung 12 geeignet aufbereitet wiederzugeben. Zusätzlich oder alternativ dient die Steuereinrichtung C, C1 auch dazu, von der mit der Steuereinrichtung C, C1 verbundenen Kamera 3, 13 bereitgestellte Bilddaten d, d1 aufzubereiten und zu dem jeweils anderen Ort zu übertragen. Bei der beispielhaft dargestellten Übertragung handelt es sich um eine Datenübertragung über eine Funkschnittstelle V, wobei jedoch auch andere Schnittstellen, insbesondere auch eine kabelgebundene Übertragung über das Internet umsetzbar sind.

Wie dies aus Fig. 3 gut ersichtlich ist, sind die Kameras 3, 13 bei derzeitigen Anwendungen üblicherweise oben auf dem Bildschirm 11 montiert, sofern sie nicht sogar abseits des Bildschirms seitlich auf einer Tischplatte aufgestellt sind. Bekannt ist insbesondere auch die direkte Integration einer Kamera in den oberen Rahmenbereich eines Bild-Wiedergabegeräts oberhalb der eigentlichen Anzeigeeinrichtung 12. Nachteilhaft bei solchen Anordnungen ist, dass der Aufnahmebereich 4 bzw. Aufnahmewinkel von einer derart angeordneten Kamera 3, 13 von oben herab auf den Teilnehmer P gerichtet ist. Dies bewirkt, dass das Bild des Teilnehmers an dem anderen Ort aus einer falschen Perspektivedargestellt wird. In Fig. 3 ist mit der gepunkteten Darstellung an dem anderen Ort die eigentlich korrekte Wiedergabe des Teilnehmers P skizziert. Tatsächlich wird jedoch ein verzerrtes Bild des Teilnehmers P* wiedergegeben, welches aufgrund der Kameraposition oberhalb des Bildschirms durch eine scheinbare Rotation ω* um eine horizontale Achse entsteht.

Ein weiteres Problem bei solchen Anordnungen besteht darin, dass der jeweils vor einem Bildschirm sitzende Teilnehmer P reflexartig auf die Augen E des ihm auf seinem Bildschirm 11 angezeigten Gesprächspartners blickt. Dadurch sind die Augen des Teilnehmers P nicht in die Kamera 3 gerichtet. Aus Sicht des anderen Teilnehmers blickt deshalb der erste Teilnehmer P ihn faktisch während des gesamten Gespräches niemals direkt an und umgekehrt. Dieses aus der Kamera-Bildschirm-Geometrie resultierende scheinbare Verhalten der beiden Gesprächsteilnehmer wirkt auf beide sehr befremdlich und verhindert die emotionale Akzeptanz der Videotelefonie.

Ein Ziel von Entwicklungen im Bereich der Videotelefonie bzw. Videokonferenzen besteht darin, das Problem der falsch erscheinenden Blickrichtung zu lösen. Allgemein ist aus Steven M. Seitz and Charles Dyer, "View morphing", Siggraph 1996, ein Verfahren bekannt, eine räumliche Beschaffenheit eines Körpers aus Bildern mehrerer gegeneinander versetzter Kameras oder aus einer Tiefeninformation einer einzelnen Kamera zu ermitteln. Nach Erstellung eines 3D-Modells des abzubildenden Körpers ist es möglich, diesen Körper um beliebige Achsen zu drehen und aus jeder Richtung zu betrachten. Umsetzbar ist ein solches Verfahren auch auf ein Gesicht eines Teilnehmers einer Videokonferenz, welches so gedreht werden könnte, dass es auf dem Bildschirm des anderen Teilnehmers so wiedergegeben wird, dass es diesen direkt anschaut. Je nach der Qualität des 3D-Modells können dabei jedoch Qualitätsverluste entstehen, die gerade bei Gesichtern, für deren Details das menschliche Auge besonders empfindlich ist, stören würden. Außerdem sind derartige Algorithmen für beliebige Kamerastellungen schwer zu rechnen.

Technisch sehr aufwendige Verfahren und Vorrichtungen zum Verhindern eines Blickverlustes bei einer Videokonferenz sind aus US 6,208,373 B1 bekannt. Bei den darin beschriebenen Ausführungsformen bestehen zusätzliche Probleme dadurch, dass zwei oder mehr Kameras von der Anzeigeeinrichtung bzw. dem Bildschirm entfernt zu positionieren sind. Ein Verarbeitungssystem bzw. eine Steuereinrichtung erhält Informationen über die Lage des aktiven Bildes auf dem Bildschirm und rechnet die Bilder der beiden oder mehr Kameras so um, dass sie scheinbar von einer Kamera hinter dem aktiven Bild bzw. der aktiven Anzeigeeinrichtung stammen. Die Kameras sind dabei nicht in der Anzeigeeinrichtung integriert. Die Position der virtuellen Kamera hinter dem aktiven Bild bzw. hinter der Anzeigeeinrichtung wird nicht näher festgelegt, was zur Folge hat, dass eine ausreichend genaue Positionierung von abgebildeten Augen nicht möglich ist. Dies fällt jedoch dem Betrachter des abgebildeten Bildes zumindest unbewusst auf, weil die Augen des Betrachters die Blickrichtung einer abgebildeten Person extrem genau bestimmen können. Weil die Lage des aktiven Bildes auf dem Bildschirm beliebig ist, ist ein hoher Rechenaufwand erforderlich. Außerdem werden keine Maßnahmen ergriffen, ein vertikales Verkippen bzw. eine vertikale Rotation des Hintergrundes zu vermeiden.

Besonders nachteilhaft ist bei Ausführungen des Standes der Technik, dass eine Drehung um eine horizontale Achse erforderlich ist, wenn sich die Kamera oberhalb oder unterhalb des Bildschirms befindet. Eine solche Drehung um eine horizontale Achse ist nachteilhaft, weil der zu drehende Kopf sich vor dem Hintergrund eines Raumes befindet. Sofern der zu drehende Kopf nicht rechentechnisch sehr aufwendig, sofern überhaupt möglich, aus dem Hintergrund separiert werden soll, lässt sich der Kopf nicht unabhängig vom Hintergrund drehen, so dass auch der Hintergrund vertikal verkippt werden würde. Dadurch würde ein im Allgemeinen sehr unnatürlicher Eindruck entstehen. Außerdem würde zumindest ein einfacher Algorithmus stets nicht nur den abzubildenden Kopf allein sondern den gesamten Körper drehen. Ein Mensch würde jedoch realistisch den Kopf allein drehen und den Körper festlassen, wobei eine auch dies berücksichtigende Korrekturberechnung rechentechnisch noch aufwendiger wäre.

Die Aufgabe der Erfindung besteht darin, ein technisch einfaches Verfahren und eine technisch einfache Vorrichtung bzw. Anordnung zum Aufnehmen, Übertragen und/oder Wiedergeben von Bilddaten, insbesondere Videokonferenz-Bilddaten zu ermöglichen. Dabei soll eine Abbildung einer Person auf einem Bildschirm möglichst natürlich wirken, das heißt dem Betrachter der Abbildung in die Augen blicken, wobei Verzerrungen insbesondere in vertikaler Richtung so weit möglich vermieden werden sollen.

Diese Aufgabe wird durch ein Verfahren zum Aufnehmen, Übertragen und/oder Wiedergeben von Bilddaten, insbesondere Videokonferenz-Bilddaten mit den Merkmalen gemäß Patentanspruch 1 bzw. durch eine Vorrichtung mit den Merkmalen gemäß Patentanspruch 16 gelöst. Vorteilhafte Ausgestaltungen sind Gegenstand abhängiger Ansprüche.

Bevorzugt wird demgemäss ein Verfahren zum Aufnehmen, Übertragen und/oder Wiedergeben von Bilddaten, insbesondere Videokonferenz-Bilddaten, bei dem aufgenommene und an einem zum Aufnahmeort entfernten Ort wiederzugebende solcher Bilddaten verarbeitet werden zum optimierten Darstellen auf einer Anzeigeeinrichtung zum Wiedergeben der Bilddaten eines Bild-Wiedergabegeräts, wobei in den Bilddaten nach Augen gesucht wird und ein wiederzugebendes Bild des Teilnehmers so innerhalb der Anzeigeeinrichtung angeordnet wird, dass die Augen auf Höhe zumindest einer seitlich der Anzeigeeinrichtung angeordneten Kamera wiedergegeben werden. Die Augen brauchen dabei nur ungefähr auf der Höhe der seitlich positionierten Kamera wiedergegeben zu werden, damit das Verfahren durchgeführt werden kann.

Vorrichtungsgemäß wird bevorzugt eine Anordnung bzw. Vorrichtung zum Aufnehmen, Übertragen und/oder Wiedergeben von Bilddaten, insbesondere Videokonferenz-Bilddaten, mit zumindest einer Kamera zum Aufnehmen der Bilddaten als Bilddaten eines Teilnehmers zur Wiedergabe auf einer entfernten Anzeigeeinrichtung und mit einer Steuereinrichtung zum Verarbeiten der Bilddaten zur Verarbeitung der wiederzugebenden Bilddaten, wobei die zumindest eine Kamera seitlich einer Anzeigeeinrichtung zum Wiedergeben der Bilddaten eines Bild-Wiedergabegerätes angeordnet sind.

Vorzugsweise werden die Bilddaten um eine vertikale Achse gedreht zum Ausrichten der Augen in Blickrichtung eines Betrachters der Abbildung. Mit einer solchen Rotation bzw. Drehung wird eine seitliche Verschiebung des Abbildes der Augen korrigiert, welche dazu dient, ein Gesicht des abgebildeten Teilnehmers mittels einer seitlichen Verschiebebewegung in die Mitte der Anzeigeeinrichtung zu verschieben, das heißt aus einer Kameraposition seitlich zu verschieben. Vermieden wird somit eine falsche Perspektive, welche den Kopf so zeigen würde, als wäre er tatsächlich und nicht nur scheinbar um eine horizontale Achse rotiert worden.

Eigenständig vorteilhaft ist insbesondere en solches Verfahren zum Aufnehmen, Übertragen und/oder Wiedergeben von Bilddaten, insbesondere Videokonferenz-Bilddaten, bei dem aufgenommene und an einem zum Aufnahmeort entfernten Ort wiederzugebende solcher Bilddaten verarbeitet werden zum optimierten Darstellen auf einer Anzeigeeinrichtung eines Bild-Wiedergabegeräts, wobei innerhalb der Bilddaten Augen gesucht werden und eine Position innerhalb der Augen abgebildeter Pupillen verändert, insbesondere seitlich verschoben wird. Die Pupillen werden dabei bevorzugt mittig in einen weißen Bereich der abzubildenden Augen gelegt werden.

Alternativ vorteilhaft ist ein derartiges Verfahren, bei dem die Bilddaten insbesondere eines abzubildenden Kopfes derart weit gedreht werden, bis in den Augen abzubildende Pupillen mittig im Weißen der Augen liegen.

Mittels solcher Pupillen-Korrekturen lässt sich auf einfache Art und Weise eine Feinjustierung vornehmen, welche einen besonders natürlich wirkenden Eindruck für den Betrachter des Bildes bewirkt. Besonders vorteilhaft ist dabei, dass nur ein sehr kleiner Bildausschnitt für sowohl die Bestimmung einer Verschiebung oder Drehung der Bilddaten als auch gegebenenfalls die eigentliche Modifikation der Bilddaten zu berücksichtigen ist.

Bevorzugt wird innerhalb eines aktiven Fensters nach den Augen gesucht, wobei das aktive Fenster auf einen Bereich der Bilddaten um die horizontale Achse herum gelegt wird. Das aktive Fenster wird dabei vorzugsweise zuerst in einen Randbereich der Bilddaten eines abzubildenden Bildes gelegt. Durch eine solche Positionierung eines aktiven Fensters muss nicht die gesamte Datenmenge der Bilddaten nach Augen durchsucht werden. Es reicht aus, in einem ersten Schritt in den seitlichen Randbereichen auf Höhe der Kameras nach den Augen eines aufgenommenen und wiederzugebenden Teilnehmers zu suchen, da die Augen aufgrund der Anordnung der Kameras seitlich der Anzeigeeinrichtung in diesen Bildbereichen am ehesten zu erwarten sind. Eine Verschiebung des aktiven Fensters für den Fall, dass keine Augen gefunden werden, erfolgt vorzugsweise erst in horizontaler Richtung in dem Bereich um die horizontale Achse herum, bevor weitere Ausschnitte der Bilddaten nach Augen durchsucht werden. Dies ermöglicht eine schnelle Auffindung der Augen und somit eine kurze Verarbeitungszeit. Letztendlich wird dadurch nicht nur Rechenleistung eingespart, sondern auch eine möglichst unverzögerte Wiedergabe von zuvor aufgenommenen Bilddaten ermöglicht.

Aufgenommene Bilddaten werden zur Darstellung eines Gesichtes bevorzugt erst gezoomt und erst nach dem Zoomen wird eine Verschiebung und/oder Drehung der Bilddaten durchgeführt. Gemäß eigenständig vorteilhafter Ausgestaltung wird so ermöglicht, einerseits das Gesicht eines von einer Kamera entfernteren Teilnehmers auf eine vorteilhaft abbildbare Größe mit natürlicher Wiedergabegröße zu zoomen, bevor die rechentechnisch aufwendige Verschiebung und/oder Drehung vorgenommen wird. Die eigentliche Verschiebung und/oder Drehung muss daher nur auf Anteile der Bilddaten angewendet werden, welche auch tatsächlich wiederzugeben sind und nicht auf die Gesamtmenge der aufgenommenen Bilddaten.

Vorzugsweise werden Bilddaten zweier Kameras, welche auf Höhe der horizontalen Achse seitlich der Anzeigeeinrichtung aufgenommen wurden, gemeinsam verarbeitet zum Bereitstellen eines gemischten Bildes zur Abbildung auf einer entfernten Anzeigeeinrichtung.

Die Bilddaten werden entsprechend vorzugsweise mittels zweier Kameras aufgenommen, welche auf Höhe der horizontalen Achse seitlich einer am Aufnahmeort angeordneten Anzeigeeinrichtung angeordnet sind, wobei von einer dieser Kameras die Bilddaten zur Wiedergabe auf der entfernten Anzeigeeinrichtung ausgewählt werden.

Umsetzbar ist, die Bilddaten in einem Bild-im-Bild-Bild innerhalb eines Anzeigebereichs eines Bildschirms anzuzeigen.

Insbesondere können die Bilddaten verarbeitet werden, die Augen und/oder Pupillen nicht auf Höhe der Achse abzubilden, wenn der abzubildende Teilnehmer nicht auf eine festlegbare Position vor ihm, insbesondere auf einen festgelegten Bildbereich eines vor ihm angeordneten Bildschirms blickt. Dadurch wird vorzugsweise auch eine natürliche Verhaltensweise der abzubildenden Person berücksichtigt. Auch in einer Videokonferenz schaut eine Person ihr Gegenüber nicht permanent an, insbesondere wenn sich die Videokonferenz während des Fernsehens mittels Einblendung in einem PIP-Bild PIP ereignet.

Ein von dem abzubildenden Teilnehmer erzeugtes Signal kann dazu erfasst und einem Blick auf eine bestimmte Position, insbesondere Bildschirmposition zugeordnet werden. Vorzugsweise wird dabei das Signal der Position zugeordnet, welche einem Blick auf einen auf dem Bildschirm abgebildeten kommunizierenden Teilnehmer entspricht.

Optional können zumindest zwei Blickpositionen erfasst werden, von denen eine einem Blick auf einen auf dem Bildschirm abgebildeten kommunizierenden Teilnehmer entspricht.

Vorrichtungsgemäß wird bevorzugt, wenn eine Kamerahöhe der zumindest einen Kamera auf Höhe einer horizontalen Achse der Anzeigeeinrichtung angeordnet ist, in deren Bereich bei Darstellung eines Kopfes in dem Kopf befindliche Augen abzubilden sind. Die horizontale Achse ist bevorzugt in der oberen Bildhälfte, insbesondere im Übergangsbereich der oberen beiden Drittel der Anzeigeeinrichtung angeordnet.

Die Steuereinrichtung ist bevorzugt geschaltet oder ausgelegt, die auf der Anzeigeeinrichtung wiederzugebenden Bilddaten nach einer Abbildung von Augen zu durchsuchen und nachfolgend die Bilddaten derart zu verschieben und/oder zu drehen, dass die Augen auf Höhe der horizontalen Achse abgebildet werden.

Besonders bevorzugt werden zwei Kameras, welche beidseitig seitlich der Anzeigeeinrichtung auf Höhe der horizontalen Achse angeordnet sind.

Eigenständig vorteilhaft ist eine Software in einer Steuereinrichtung zum Verarbeiten von Bilddaten mittels eines solchen Verfahrens.

Um ein für die räumliche Transformation des Teilnehmers verwendbares Bild des Teilnehmerkopfes oder auch gegebenenfalls des ganzen Körpers des Teilnehmers zu erzeugen, wird somit eine spezielle Anordnung vorrichtungsgemäß bereitgestellt. Zwei Kameras sind dabei an den Seiten eines Bild-Wiedergabegeräts, z. B. eines Fernsehgeräts oder eines Computermonitors derart angebracht, dass sie sich auf gleicher Höhe befinden. Außerdem sind die beiden Kameras derart angeordnet, dass ihre horizontale Verbindungslinie als eine horizontale Achse durch einen Bildausschnitt des abgebildeten Bildes verläuft, in welchem der Kopf des Gegenübers üblicherweise dargestellt werden soll. Das Abbild eines auf dem Bildschirm 11 bzw. der Anzeigeeinrichtung 12 abzubildenden Teilnehmers wird derart verschoben, dass eine Augenpartie des abzubildenden Teilnehmers auf der Verbindungslinie der beiden Kameras angeordnet wird. Dies bewirkt, dass der vor dem Bildschirm sitzende Teilnehmer automatisch unbewusst mit seinen Augen auf die Verbindungslinie zwischen die Kameras blickt und somit die Augen hinsichtlich der Höhe auf einen Punkt blicken, welcher die gleiche Höhe wie die Kameras hat.

Entsprechend braucht aus den beiden Bildern bzw. Bildfolgen in Form der Bilddaten der beiden Kameras nur noch eine horizontale Korrektur vorgenommen werden, um den Eindruck bei dem entfernten Teilnehmer zu erzeugen, dass der Betrachter diesen ebenfalls direkt anblickt. Insbesondere ist nur eine leichte Rotation oder Verschiebung des Gesichtes des durch die Kameras aufgenommenen Teilnehmers erforderlich, wozu bereits ein einfaches 3D-Modell oder ein einfacher Algorithmus genügen. Sofern eine restliche Verzerrung in vertikaler Richtung vorliegen sollte, müsste außerdem nur noch um die vertikale Achse eine Korrektur bzw. Rotation um einen deutlich kleineren Winkel durchgeführt werden, als im Fall einer Kamera die oberhalb oder unterhalb des Bildschirms oder beabstandet vom Bildschirm im Raum angeordnet ist. Mit einer nur geringen Winkelkorrektur ist somit ein Bild abbildbar, dessen abgebildeter Teilnehmer einem Betrachter vermeintlich direkt in die Augen schaut.

Insbesondere kann bei einer solchen Anordnung eine Drehung bzw. Rotation um eine horizontale Achse vermieden werden, welche mit erheblichen Nachteilen verbunden wäre, da der zu drehende Kopf sich vor dem Hintergrund eines Raumes befindet.

Bei der vorgeschlagenen Lösung wird somit vorrichtungsgemäß und verfahrensgemäß ein Teil der bestehenden Probleme dadurch vermieden, dass durch ein Gesamtarrangement von Kamerapositionierung und Wiedergabe eines abzubildenden Gesichtes eines entfernt aufgenommenen Teilnehmers die Lösung des Problems vereinfacht wird, weil die auszuführende Drehung des Gesichtes nur noch um die besonders geeignete vertikale Achse und auch nur noch um einen kleineren Winkel auszuführen ist. Die vertikal verlaufende Achse ist deshalb besonders geeignet, weil auf der Empfängerseite nicht der Eindruck entsteht, dass der Empfänger von oben oder unten angeschaut wird. Außerdem muss zusätzlich zu einer Drehung nicht auch noch eine Verbiegung des Körpers des abzubildenden Teilnehmers herausgerechnet werden.

Sofern die Abbildung der Augenlinie nicht präzise auf die Verbindungslinie der Kameras ausgerichtet wird oder wenn sich ein aktives Fenster zur Suche nach Augen oder äquivalent dazu anderen Gesichtsmerkmalen wie der Nase innerhalb des abgebildeten Bildes nicht exakt auf der Verbindungslinie befindet, ist die Anwendung des Verfahrens zur Bildkorrektur trotzdem noch möglich. In einem solchen Fall ist gegebenenfalls eine Feinkorrektur des Gesichtsausdrucks durch Justierung allein eines Bildabschnitts mit den Pupillen der abzubildenden Augen ausreichend, um eine korrekte Blickrichtung zu erzeugen. Eine solche Feinjustierung ist als ein auch eigenständig erfinderisches Merkmal hervorzuheben. Dazu kann auf einfache Art und Weise der Kopf oder gegebenenfalls auch nur der Pupillenbereich so lange gedreht werden, bis die Pupillen mittig im weißen der Augen liegen.

Die Gesamtanordnung aus Vorrichtung und Verfahren bietet somit eine Vielzahl von Verbesserungen und Vorteilen zugunsten insbesondere der erforderlichen Rechenleistung. So kann mit dem Ziel, die notwendige Rechenleistung zu begrenzen, die Position eines aktiven Fensters zur Suche nach charakteristischen Merkmalen wie den Augen auf dem Bildschirm bzw. der eigentlichen Anzeigeeinrichtung eingegrenzt werden auf einen Bereich innerhalb des oberen rechten oder linken Quadranten des Bildschirms. Eine weitere Reduzierung der erforderlichen Rechenleistung ergibt sich dadurch, dass die beiden Kameras seitlich fest am Bild-Wiedergabegerät angebaut oder eingebaut sind, und zwar so, dass ihre Verbindungslinie durch die Mitte oder die obere Hälfte des aktiven Fensters verläuft. Dadurch kann ein vertikales Kippen bzw. Drehen um die horizontale Achse vermieden werden. Außerdem gibt es durch die Anordnung von zwei Kameras beidseitig des Bild-Wiedergabegerätes immer eine Kamera, nämlich die dem Blick näherliegende, in Richtung auf die das Bild, das heißt das Gesicht des abzubildenden Teilnehmers und der Hintergrund mit nur geringem Aufwand gedreht werden kann, um den gewünschten Effekt zu erreichen.

Vorteilhaft ist weiterhin, wenn für den Fall sich weit von dem Fernsehgerät und damit den Kameras entfernt befindlichen Konferenz-Teilnehmern die Bilder von den beiden Kameras zunächst um einen für beide etwa gleichen Faktor gezoomt werden, bevor die Drehung des Gesichtes, beispielsweise durch das für sich bekannte Morphing, berechnet wird. Besonders vorteilhaft ist aus Gründen des Rechenaufwands, dass eine virtuelle Kameraposition an der Stelle des aktiven Fensters nicht berechnet werden muss, da bei der vorgesehenen Anordnung der Kameras und Verfahrensweise der Bilddatenbearbeitung eine virtuelle, ungefähre Drehung des abzubildenden Gesichtes zusammen mit dem Hintergrund des Raumes, in dem sich der Teilnehmer befindet, ausreicht. Der dabei entstehende Nachteil, dass der Kopf von einer virtuellen Kamera aus betrachtet, andere Teile des Hintergrundes, nämlich die eigentlichen korrekten Teile des Hintergrundes verdeckt als wenn das Bild einfach nur einer virtuellen Drehung unterzogen werden würde, kann in Kauf genommen werden, da dieser Unterschied für den Betrachter des Bildes nicht sehr auffällt bzw. als unwichtig anzunehmen sein kann.

Ein Ausführungsbeispiel wird nachfolgend anhand der Zeichnung näher erläutert. Es zeigen:
- Fig. 1: eine Anordnung zum Durchführen einer Videokonferenz, welche über zwei zueinander entfernte Orte verteilt angeordnet ist,
- Fig. 2: ein Ablaufdiagramm für ein beispielhaftes Verfahren zum Verarbeiten von Bilddaten einer solchen Anordnung und
- Fig. 3: eine Anordnung gemäß dem Stand der Technik.

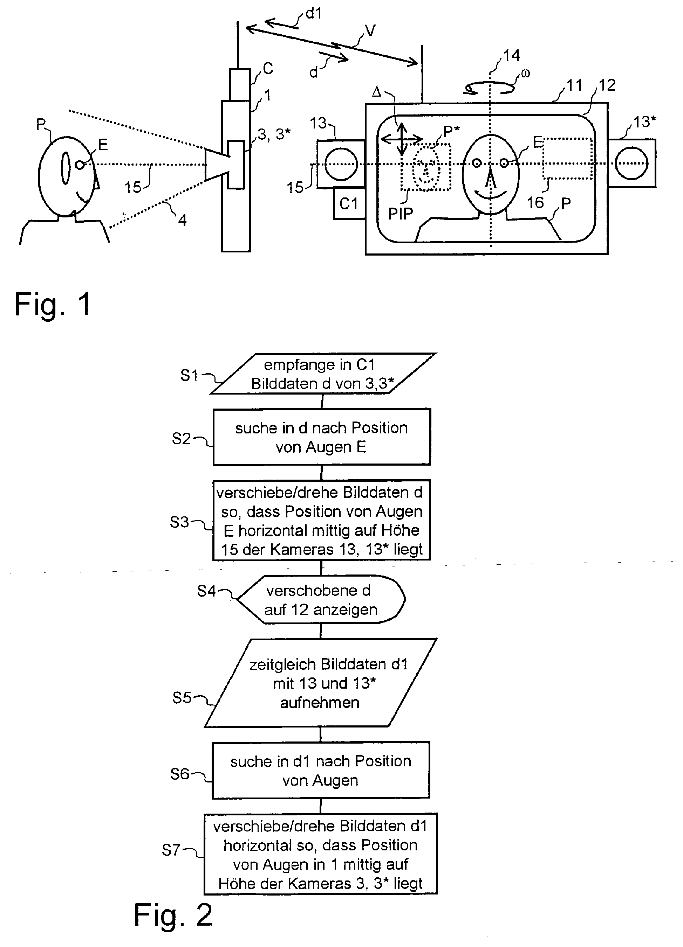

Fig. 1 zeigt über zwei Orte verteilt Komponenten für eine Videokonferenz. Auf der linken Seite ist schematisch ein erster Ort in Seitenansicht dargestellt. Ein Teilnehmer P einer Videokonferenz blickt mit seinen Augen E auf einen Bildschirm 1 eines Bild-Wiedergabegerätes. Außerdem wird der Teilnehmer P mittels zweier Kameras 3, 3* aufgenommen, welche auf ihn gerichtet sind. Die Kameras 3, 3* haben einen Aufnahmebereich 4 bzw. Aufnahmewinkel, welcher so gewählt ist, dass eine horizontale Achse 15 des Aufnahmebereichs 4 vorzugsweise auf Augenhöhe der Augen E des Teilnehmers P angeordnet ist. Dies wird dadurch erreicht, dass die Kameras 3, 3* nicht oberhalb oder unterhalb des Bildschirms 1 sondern seitlich des Bildschirms 1 angeordnet sind. Unter einer seitlichen Anordnung ist dabei auch zu verstehen, dass die Kameras 3, 3* gegebenenfalls in dem Bild-Wiedergabegerät integriert sind und innerhalb eines Rahmens seitlich der eigentlichen Anzeigeeinrichtung des Bildschirms 1 integriert sind.

Optional können die Kameras 3, 3* auch höhenverstellbar seitlich am Bildschirm 11 angeordnet sein, so dass sie auf individuelle Bedürfnisse bzw. individuelle Kopfhöhen des Teilnehmers P relativ zu seinem Bildschirm 1 justiert werden können. Im Fall einer solchen Anordnung mit höhenverstellbaren Kameras 3, 3* ist deren Höhenposition zweckmäßigerweise in Form entsprechender Höhendaten an eine zentrale Steuereinrichtung C übermittelbar.

Eine Steuereinrichtung C kann als externe Komponente oder als in den Kameras 3, 3* und/oder dem Bild-Wiedergabegerät integrierte Komponente bereitgestellt sein. Die Steuereinrichtung C dient dazu, ein mittels der Kameras 3, 3* aufgenommenes Bild bzw. entsprechende Bildfolgen zu verarbeiten und als Bilddaten d zur Wiedergabe auf einem entfernten Bildschirm 11 an dem entfernten Ort bereitzustellen. Die Steuereinrichtung C kann aber auch dazu eingesetzt werden, von dem entfernten Ort empfangene Bilddaten d1, welche gegebenenfalls nicht oder nicht ausreichend verarbeitet sind, zur Wiedergabe auf dem der Steuereinrichtung C zugeordneten Bildschirm 1 am eigenen Ort aufzubereiten und zu verarbeiten.

Anhand der rechten Seite sind die Komponenten am entfernten Ort dargestellt. Erkennbar ist, dass die beiden Kameras 13, 13* auf gleicher Höhe angeordnet sind, insbesondere auf Höhe der horizontalen Achse 15. Hinsichtlich Ausrichtung und Funktionalität entsprechen die beiden Kameras 13, 13* vorzugsweise den beiden Kameras 3, 3* an dem anderen entfernten Ort. Zur Verarbeitung empfangener Bilddaten d und/oder zu übertragender Bilddaten d1 dient wieder eine Steuereinrichtung C1, welche hinsichtlich ihrer Funktionalität vorzugsweise der Funktionalität der Steuereinrichtung C der Anordnung am anderen Ort entspricht. ,

Dargestellt ist die Anordnung am entfernten Ort mit ebenfalls einem Bildschirm 11 und einer darauf skizzierten eigentlichen Anzeigeeinrichtung 12 in vorderseitiger Ansicht, wie sie von einem Betrachter als einem Teilnehmer an dem entfernten Ort gesehen wird.

Gut erkennbar ist, dass die horizontale Achse 15 bzw. die Kameras 13, 13* derart angeordnet sind, dass sie hinsichtlich der Höhenausrichtung mittig oder vorzugsweise in der oberen Hälfte, insbesondere im Übergangsbereich zwischen den beiden oberen Dritteln des Bildschirms 11 bzw. der Anzeigeeinrichtung 12 angeordnet sind. In diesem Höhenbereich ist eine besonders natürliche Darstellung eines Abbildes des am entfernten Ort aufgenommenen Teilnehmers und insbesondere von dessen Augen E möglich.

Bei einer solchen Anordnung findet eine automatische Höhenjustierung unbewusst durch die miteinander kommunizierenden Teilnehmer P statt. Da die Kameras 3, 3*, 13, 13* auf Höhe der Augen E der Teilnehmer P angeordnet sind, entsteht bei der Wiedergabe ein natürlicher Eindruck, wenn das abgebildete Bild des jeweils entfernten Teilnehmers P so auf dem Bildschirm 11 bzw. der Anzeigeeinrichtung 12 wiedergegeben wird, dass die abgebildeten Augen E auf Höhe der horizontalen Achse 15 liegen. Dazu wird gegebenenfalls durch eine oder beide der Steuereinrichtungen C, C1 eine entsprechende Korrektur der Bilddaten d, d1 vorgenommen. Im Idealfall reicht eine Verschiebung Δ in seitlicher Richtung und/oder in Höhenrichtung.

Um eine solche Verschiebung ohne Verlust an Informationsgehalten an den Rändern, von denen die Verschiebebewegung weg erfolgt, vornehmen zu können, wird vorzugsweise nur ein zentraler Ausschnitt des mittels der Kameras 3, 3* insgesamt aufgenommenen Aufnahmebereichs 4 abgebildet und/oder ein entsprechender Ausschnitt durch Zoomen entsprechend vergrößert.

Bei einer solchen Anordnung ist es zweckmäßig, wenn der Teilnehmer P, welcher auf dem Bildschirm 11 abgebildet wird, in horizontaler Richtung mittig abgebildet wird. Dazu kann gemäß einer etwas rechen-aufwendigeren Umsetzung ein Bild aus den Einzelbildern bzw. Bilddaten d beider Kameras 3, 3* durch entsprechende Bildverarbeitung neu konstruiert werden. Gemäß einer bevorzugten Ausführungsform werden jedoch nur Bilddaten d einer der beiden Kameras 3, 3* verwendet, wobei das Abbild des Teilnehmers gegebenenfalls in seitlicher Richtung zu verschieben ist, sofern die Kameras 3, 3*, 13, 13* nicht bereits ausreichend leicht schräg in Richtung eines zentralen Punktes vor den Kameras, das heißt auf die Gesichtsmitte des aufzunehmenden Teilnehmers P gerichtet sind. Insbesondere kann eine leichte Rotation ω um eine vertikale Achse 14 vorteilhaft eingesetzt werden, um einen natürlicheren Eindruck bei der Wiedergabe der Person P zu erzielen.

Zur Datenverarbeitung wird insbesondere ein Bilddatenbereich einer Position eines aktiven Fensters 16 berücksichtigt, welches im oberen Bildbereich, insbesondere im oberen linken oder im oberen rechten Bildbereich des aufgenommenen und/oder des anzuzeigenden Bildes angeordnet ist. Vorzugsweise schneidet die horizontale Achse 15 die Position des aktiven Fensters 16.

Fig. 2 zeigt ein Ablaufdiagramm einer lediglich beispielhaften Abfolge von Verfahrensschritten bei einer Verarbeitung der Bilddaten d, d1 in einer oder beiden der Steuereinrichtungen C, C1. Neben der Möglichkeit, sämtliche Verfahrensschritte in einer einzigen der Steuereinrichtungen C, C1 durchzuführen, besteht vorteilhaft auch die Möglichkeit, einen Teil der Verfahrensschritte in nur einer der beiden Steuereinrichtungen C, C1 und einen anderen Teil der Verfahrensschritte in der anderen der Steuereinrichtungen C1, C vorzunehmen. Prinzipiell möglich ist auch das Hinzufügen weiterer vorteilhafter Verfahrensschritte zur Datenverarbeitung oder auch das Weglassen einzelner der beschriebenen Verfahrensschritte.

Bei dem beispielhaft skizzierten Verfahrensablauf werden in einem ersten Schritt S1 Bilddaten d von einer oder beiden der Kameras 3, 3* am ersten Ort von der Anordnung am zweiten Ort, insbesondere von der dortigen Steuereinrichtung C1 empfangen. Mittels Datenverarbeitung wird in diesen Bilddaten d nach der Position von Augen E eines abzubildenden Teilnehmers P in einem nachfolgenden zweiten Verfahrensschritt S2 gesucht. Danach werden in einem dritten Verfahrensschritt S3 die Bilddaten d bzw. ein diesen entsprechendes abzubildendes Bild bei Bedarf so verschoben und/oder gedreht, dass die Position der Augen E horizontal mittig auf Höhe der horizontalen Achse 15 liegt. Das heißt die Wiedergabe bzw. Abbildung der Augen E auf dem Bildschirm 11 bzw. auf dessen Anzeigeeinrichtung 12 erfolgt in einem vierten Verfahrensschritt S4 auf Höhe der Kameras 13, 13*, welche seitlich des Bildschirms 11 angeordnet sind.

Zeitgleich dazu werden Bilddaten d1 mit den Kameras 13, 13* an diesem Ort aufgenommen. Mittels ebenfalls der Steuereinrichtung C1 an diesem Ort oder optional nach Übertragung der Bilddaten d1 zum entfernten Ort durch die dortige Steuereinrichtung C wird wieder nach einer Position von Augen eines durch die Kameras 13, 13* aufgenommenen Teilnehmers gesucht. Nach diesen fünften und sechsten Verfahrensschritten S5, S6 wird eine Verschiebung und/oder Drehung der Bilddaten d1 horizontal so vorgenommen, dass die Position von Augen auf dem Bildschirm 1 bzw. dessen Anzeigeeinrichtung an dem entfernten ersten Ort wieder mittig auf Höhe der Kameras 3, 3* bzw. der horizontalen Achse 15 in einem siebten Schritt S7 abgebildet wird. Letztendlich entsprechen die ersten drei Schritte S1 bis S3 den letzten drei beschriebenen Schritten S5 bis S7, wobei die erste Gruppe an Verfahrensschritten die Bilddaten für die Wiedergabe auf dem einen Bildschirm und die andere Gruppe der Verfahrensschritte die Bilddaten für die Wiedergabe auf dem anderen, dazu entfernten Bildschirm verarbeitet bzw. aufbereitet. Neben der Möglichkeit die Verfahrensschritte verteilt auf zwei Orte durchzuführen, besteht insbesondere auch die Möglichkeit, sämtliche Verfahrensschritte und Bilddatenverarbeitungen an einem Ort vorzunehmen. In letzterem Fall kann dadurch auch eine Videokonferenz mit einem entfernten Teilnehmer durchgeführt werden, bei dem zwar die Kameras vorzugsweise in der geeigneten Höhe angeordnet sind, an dem eine entsprechende Software und/oder Steuereinrichtung zum Durchführen einer entsprechenden Software jedoch nicht vorliegt.

Gemäß einer besonders bevorzugten Ausgestaltung werden auf einem Fernsehgerät als dem Bildschirm 1 bzw. dessen Anzeigeeinrichtung während des Fernsehens die Video- bzw. Bilddaten d1 aus einem Telefongespräch vorzugsweise in einem Bild-im-Bild PIP zur Anzeige gebracht. Das Bild-im-Bild kann dabei dem aktiven Fenster 16 oder einem davon unabhängigen eigenständigen Bildbereich entsprechen. Ein Auge oder eine Augenpartie des Gegenübers bzw. des abzubildenden Teilnehmers P* wird dann so eingestellt, dass sie vertikal etwa auf die Linie bzw. Achse 15 zwischen die beiden Kameras 13, 13* verschoben wird. Daher ist die bevorzugte Position der Kameras 13, 13* irgendwo in der oberen Hälfte des PIP-Bildes PIP.

Bei der Verarbeitung der Bilddaten d1 wird vorzugsweise auch eine natürliche Verhaltensweise des abzubildenden Teilnehmers P, P* berücksichtigt. Auch in einer Videokonferenz schaut eine Person ihr Gegenüber nicht permanent an, insbesondere wenn sich die Videokonferenz während des Fernsehens mittels Einblendung in einem PIP-Bild PIP ereignet. Der Videokonferenzteilnehmer wird immer wieder einmal vom PIP-Bild PIP mit dem Konferenzteilnehmer wegschauen. Ein solches momentanes Wegschauen sollte der Algorithmus zur Verarbeitung der Bilddaten d1 nicht sofort korrigieren, denn das würde unnatürlich wirken. Für eine natürliche Wiedergabe gibt es verschiedene Lösungen.

Am einfachsten wäre, wenn der Konferenzteilnehmer als der abzubildende Teilnehmer P, P* dem Fernsehgerät mit einer Fernbedienung ein Signal gibt wenn er gerade den anderen Teilnehmer im PIP-Bild PIP anschaut. Dann können die Parameter der Scheinrotation in diesem Moment abgespeichert und für die nächste Zeit oder den Rest der Konferenz verwendet werden. Blickt der Teilnehmer nun ins Fernsehbild statt ins PIP-Bild PIP, so wirkt das für den anderen Teilnehmer an der Videokonferenz wie ein momentanes Wegschauen, was wegen eines natürlichen Effektes wichtig ist.

Gemäß einem anderen Ansatz wird im Verlauf der Videokonferenz, z.B. durch geeignete Filterung, versucht, im Wesentlichen zwei Positionen für den Kopf des abzubildenden Teilnehmers P, P* festzustellen. Eine davon ist, wenn er ins PIP-Bild PIP schaut, die andere, wenn er in das dieses PIP-Bild PIP umgebende Fernsehbild blickt. Weil der Aufbau des Bildes auf dem Fernsehbild bekannt ist, kann bestimmt werden, welche der beiden Positionen dem Blick ins PIP-Bild PIP entspricht. Ausgenutzt wird dabei z.B. die Kenntnis, dass sich das PIP-Bild PIP gerade z.B. links oben oder rechts oben im Fernsehbild befindet. Entsprechend werden dann die Parameter der Scheinrotation so gewählt, dass sie dem Blick ins PIP-Bild PIP entsprechen. Vorzugsweise werden dann außerdem keine schnellen Änderungen mehr dieser Parameter zugelassen. Langsame Anpassungen bleiben jedoch vorzugsweise erlaubt.

Möglich wäre auch, auch für die andere Position zu kompensieren. Dann entstünde der Eindruck des Anschauens gerade dann, wenn der Teilnehmer tatsächlich ins Fernsehbild schaut. Es kann allerdings seltsam wirken, wenn der Teilnehmer den anderen im Kontext des Gespräches immer zu den falschen Zeitpunkten anschaut. Das Prinzip besteht jedenfalls auch dabei darin, festzustellen, das der fernsehende Teilnehmer einer Videokonferenz im Laufe der Zeit nicht willkürlich in der Gegend herumschaut, sondern dass sich sein Blick häufig an bestimmten Stellen aufhält und dann eine Hypothese zu bilden, wann er gerade dem Gesprächsteilnehmer in die Augen schaut. Die Scheinrotation, die dieser Augen- und Gesichtsstellung entspricht, wird dann für die nächste Zeit des Gespräches ausgewählt und nur langsam verändert.

Hilfreich ist das Verwenden einer Blickrichtungsstatistik. Dabei wird aber vorzugsweise weiter nachverfolgt und ggfs. angepasst, z.B. wenn der Gesprächsteilnehmer seine Position im Raum ändern sollte oder wenn das PIP-Bild auf dem Bildschirm verschoben wird.

Insbesondere beim Einsatz von Bild-in-Bild-Darstellungen können bildverarbeitende Verfahren sowohl senderseitig durch die eine Person aufnehmende Vorrichtung als auch empfängerseitig durch eine das Bild wiedergebende Vorrichtung vorgenommen werden. Die aufnehmende Vorrichtung kann besonders einfach auf Informationen zu Kamerapositionen zugreifen, während die ein Bild wiedergebende Vorrichtung die momentane Position des Bildes-im-Bild-Bildes PIP kennt.

## Patentansprüche

1. Verfahren zum Aufnehmen, Übertragen und/oder Wiedergeben von Bilddaten (d, d1), insbesondere Videokonferenz-Bilddaten, bei dem
- aufgenommene und an einem zum Aufnahmeort entfernten Ort wiederzugebende solcher Bilddaten (d, d1) verarbeitet werden zum optimierten Darstellen auf einer Anzeigeeinrichtung (12) eines Bild-Wiedergabegeräts zum Wiedergeben der Bilddaten (d, d1),
**dadurch gekennzeichnet , dass**
- in den Bilddaten (d, d1) nach Augen (E) gesucht wird und ein wiederzugebendes Bild des Teilnehmers (P) so innerhalb der Anzeigeeinrichtung (12) angeordnet wird, dass die Augen (E) auf Höhe, insbesondere zumindest in etwa auf Höhe zumindest einer seitlich der Anzeigeeinrichtung (12) angeordneten Kamera (3, 3*, 13, 13*) wiedergegeben werden.

2. Verfahren nach Anspruch 1, bei dem die Bilddaten (d, d1) um eine vertikale Achse (14) gedreht werden zum Ausrichten der Augen (E) in Blickrichtung eines Betrachters der Abbildung.

3. Verfahren, insbesondere nach Anspruch 1 oder 2, zum Aufnehmen, Übertragen und/oder Wiedergeben von Bilddaten (d, d1), insbesondere Videokonferenz-Bilddaten, bei dem
- aufgenommene und an einem zum Aufnahmeort entfernten Ort wiederzugebende solcher Bilddaten (d, d1) verarbeitet werden zum optimierten Darstellen auf einer Anzeigeeinrichtung (12) eines Bild-Wiedergabegeräts,
**dadurch gekennzeichnet , dass**
- innerhalb der Bilddaten (d, d1) Augen gesucht werden und eine Position innerhalb der Augen abgebildeter Pupillen verändert, insbesondere seitlich verschoben wird.

4. Verfahren nach Anspruch 3, bei dem die Pupillen mittig in einen weißen Bereich der abzubildenden Augen (E) gelegt werden.

5. Verfahren nach Anspruch 1 oder 2, bei dem die Bilddaten (d, d1) insbesondere eines abzubildenden Kopfes derart weit gedreht werden, bis in den Augen (E) abzubildende Pupillen mittig im Weißen der Augen liegen.

6. Verfahren nach einem vorstehenden Anspruch, bei dem innerhalb eines aktiven Fensters (16) nach den Augen (E) gesucht wird, wobei das aktive Fenster (16) auf einen Bereich der Bilddaten (d, d1) um die horizontale Achse (15) herum gelegt wird.

7. Verfahren nach Anspruch 6, bei dem das aktive Fenster zuerst in einen Randbereich der Bilddaten (d, d1) eines abzubildenden Bildes gelegt wird.

8. Verfahren nach einem vorstehenden Anspruch, bei dem aufgenommene Bilddaten (d, d1) zur Darstellung eines Gesichtes gezoomt werden und nach dem Zoomen eine Verschiebung und/oder Drehung der Bilddaten durchgeführt wird.

9. Verfahren nach einem vorstehenden Anspruch, bei dem Bilddaten zweier Kameras (3, 3*), welche auf Höhe der horizontalen Achse (15) seitlich der Anzeigeeinrichtung aufgenommen wurden, gemeinsam verarbeitet werden zum Bereitstellen eines gemischten Bildes zur Abbildung auf einer entfernten Anzeigeeinrichtung (12).

10. Verfahren nach einem der Ansprüche 1 bis 8, bei dem die Bilddaten (d, d1) mittels zweier Kameras (3, 3*) aufgenommen werden, welche auf Höhe der horizontalen Achse (15) seitlich einer am Aufnahmeort angeordneten Anzeigeeinrichtung angeordnet sind, von einer dieser Kameras (3 oder 3*) ausgewählt werden zur Wiedergabe auf der entfernten Anzeigeeinrichtung (12).

11. Verfahren nach einem der Ansprüche 1 bis 10, bei dem die Bilddaten (d, d1) in einem Bild-im-Bild-Bild (PIP) innerhalb eines Anzeigebereichs eines Bildschirms (1) angezeigt werden.

12. Verfahren nach einem der Ansprüche 1 bis 11, bei dem die Bilddaten (d1) verarbeitet werden, die Augen und/oder Pupillen nicht auf Höhe der Achse (15) abzubilden, wenn der abzubildende Teilnehmer (P) nicht auf eine festlegbare Position vor ihm, insbesondere auf einen festgelegten Bildbereich eines vor ihm angeordneten Bildschirms blickt.

13. Verfahren nach Anspruch 12, bei dem ein von dem abzubildenden Teilnehmer (P) erzeugtes Signal erfasst und einem Blick auf eine bestimmte Position, insbesondere Bildschirmposition zugeordnet wird.

14. Verfahren nach Anspruch 13, bei dem das Signal der Position zugeordnet wird, welche einem Blick auf einen auf dem Bildschirm abgebildeten kommunizierenden Teilnehmer (P) entspricht.

15. Verfahren nach einem der Ansprüche 12 bis 14, bei dem zumindest zwei Blickpositionen erfasst werden, von denen eine einem Blick auf einen auf dem Bildschirm abgebildeten kommunizierenden Teilnehmer (P) entspricht.

16. Vorrichtung zum Aufnehmen, Übertragen und/oder Wiedergeben von Bilddaten (d, d1), insbesondere Videokonferenz-Bilddaten, mit
- zumindest einer Kamera (3, 3*, 13, 13*) zum Aufnehmen der Bilddaten (d, d1) als Bilddaten eines Teilnehmers (P) zur Wiedergabe auf einer entfernten Anzeigeeinrichtung (12) und
- einer Steuereinrichtung (C, C1) zum Verarbeiten der Bilddaten (d, d1) zur Verarbeitung der wiederzugebenden Bilddaten (d, d1),
**dadurch gekennzeichnet , dass**
- die zumindest eine Kamera (3, 3*, 13, 13*) seitlich einer Anzeigeeinrichtung zum Wiedergeben der Bilddaten (d, d1) eines Bild-Wiedergabegerätes angeordnet ist.

17. Vorrichtung nach Anspruch 16, bei der eine Kamerahöhe der zumindest einen Kamera (3, 3*, 13, 13*) auf Höhe einer horizontalen Achse (15) der Anzeigeeinrichtung (12) angeordnet ist, in deren Bereich bei Darstellung eines Kopfes in dem Kopf befindliche Augen (E) abzubilden sind.

18. Vorrichtung nach Anspruch 17, bei der die horizontale Achse (15) in der oberen Bildhälfte, insbesondere im Übergangsbereich der oberen beiden Drittel der Anzeigeeinrichtung (12) angeordnet ist.

19. Vorrichtung nach einem der Ansprüche 16 bis 18, bei der die Steuereinrichtung geschaltet oder ausgelegt ist, die auf der Anzeigeeinrichtung (12) wiederzugebenden Bilddaten (d, d1) nach einer Abbildung von Augen (E) zu durchsuchen und nachfolgend die Bilddaten (d, d1) derart zu verschieben und/oder zu drehen, dass die Augen (E) auf Höhe der horizontalen Achse (15) abgebildet werden.

20. Vorrichtung nach einem der Ansprüche 16 bis 19 mit zwei Kameras (3, 3*; 13, 13*), welche beidseitig seitlich der Anzeigeeinrichtung auf Höhe der horizontalen Achse (15) angeordnet sind.

21. Vorrichtung nach einem der Ansprüche 16 bis 20, bei der die Steuereinrichtung (C, C1) geschaltet und/oder ausgelegt ist zum Durchführen eines Verfahrens nach einem der Ansprüche 1 bis 10.

22. Software in einer Steuereinrichtung (C, C1) zum Verarbeiten von Bilddaten (d, d1) mittels eines Verfahrens nach einem der Ansprüche 1 bis 15.
